Europäisches Patentamt

European Patent Office

Office européen des brevets

(11) Publication number: **0 291 910**
**A2**

# EUROPEAN PATENT APPLICATION

(21) Application number: **88107832.3**

(22) Date of filing: **16.05.88**

(51) Int. Cl.⁴: **H01H 13/70**

(30) Priority: **18.05.87 JP 120726/87**

(43) Date of publication of application:
**23.11.88 Bulletin 88/47**

(84) Designated Contracting States:
**DE FR GB IT**

(71) Applicant: **Kabushiki Kaisha Bandai**
**5-4, 2-chome, Komagata**
**Taito-ku Tokyo(JP)**

(72) Inventor: **Sugiura, Koji**
**K.K. Bandai No. 5-4, 2-chome, Komagata**
**Taito-ku**
**Tokyo(JP)**
Inventor: **Ibe, Takaya**
**K.K. Bandai No. 5-4, 2-chome, Komagata**
**Taito-ku**
**Tokyo(JP)**

(74) Representative: **Wey, Hans-Heinrich, Dipl.-Ing.**
**Patentanwälte Wey & Partner**
**Widenmayerstrasse 49**
**D-8000 München 22(DE)**

(54) **Keyboard.**

(57) A keyboard including a plurality of keys each having a same size and shape and disposed removably and slidably on a frame of the keyboard, the top of each key provided with a marking; a plurality of key switches fixedly mounted on the keyboard frame and each having a predetermined number of movable and fixed contact pairs at predetermined positions; and a plurality of protrusions same in number as the predetermined number and formed at the bottom surface of each key at positions corresponding to the predetermined positions of the contact pairs, the plurality of protrusions being arranged in each key in a different predetermined pattern; whereby when any one of the keys is actuated, the different predetermined pattern of the plurality of protrusions identifies the one of keys, based on a combination of the plurality of protrusions acting upon the predetermined number of contact pairs.

FIG.1

# Keyboard

## Background of the Invention

### (Field of the Invention)

The present invention relates to a keyboard for use in an information processing apparatus, and more particularly to a keyboard wherein a plurality of keys are arranged detachably with respect to the keyboard, and assigned desired positions in the key array of the keyboard by providing a plurality of protrusions on the bottom of each key, the protrusion identifying the specific key.

### (Description of the Related Art)

Keys of a keyboard have various combinations of key positions, such as those seen in a JIS key board, thumb-shift key board, numeric keyboard and the like, which conform with the respective standards. Thus, the user cannot change the key position of the keyboard. Therefore, in some cases there arises a problem that keys which are frequently used are not necessarily positioned at optimum locations on the keyboard. Particularly, function keys, ten-keys or other keys frequently used by a particular operator cannot be changed in their positions once they are fixed. Further, a conventional keyboard has never considered left-handed operators. Apart from the above, there is no concept of using a keyboard itself as a toy, except that a television game can be played with the keyboard.

## Summary of the Invention

The above prior art problems have been solved in accordance with the present invention which seeks to provide a keyboard comprising:

a plurality of keys each having a same size and shape and disposed removably and slidably on a frame of the keyboard, the top of each key provided with a marking;

a plurality of key switches fixedly mounted on said keyboard frame and each having a predetermined number of movable and fixed contact pairs at predetermined positions; and

a plurality of protrusions same in number as said predetermined number and formed at the bottom surface of said each key at positions corresponding to said predetermined positions of said contact pairs, said plurality of protrusions being arranged in each key in a different predetermined pattern;

whereby when any one of said keys is actuated, said different predetermined pattern of said plurality of protrusions identifies said one of keys, based on a combination of said plurality of protrusions acting upon said predetermined number of contact pairs.

In operation, upon depression of a key, a particular protrusion or protrusions operate the corresponding contact pairs so that the depressed key is identified based on the operated protrusions. In other words, irrespective of the position of a key, information on a depressed key can be discriminated based on the operated protrusions.

The other objects and advantages of the present invention will become apparent from the following detailed description when read in conjunction with the accompanying drawings, wherein:

Fig.1 is a schematic illustration of an embodiment of the keyboard according to the present invention;

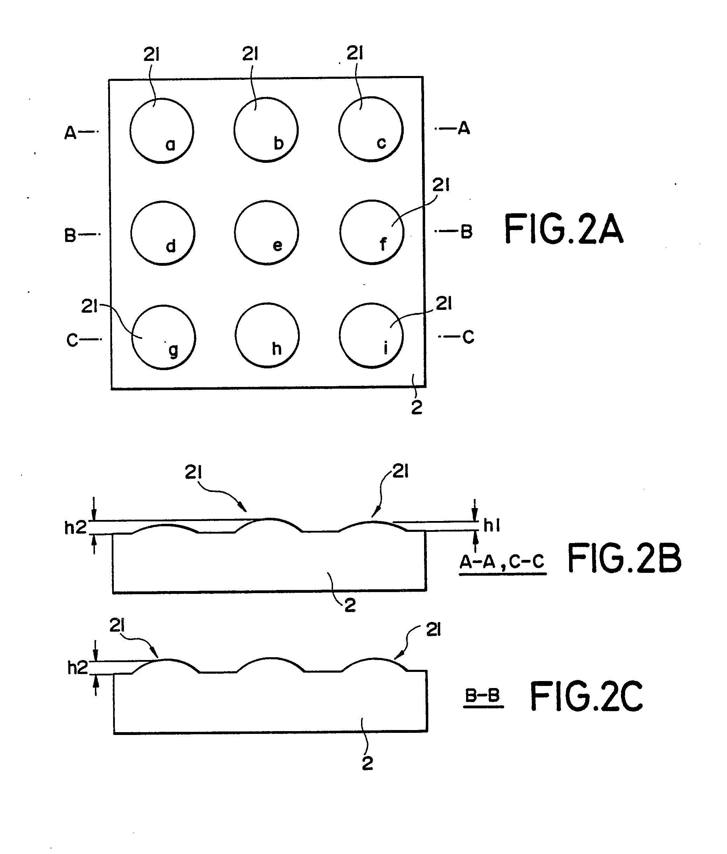

Fig.2A is a plan view of a key-top, Fig.2B is a cross section of the key-top along lines A-A and C-C of Fig.2A, and Fig.2C is a cross section of the key-top along line B-B of Fig.2A; and

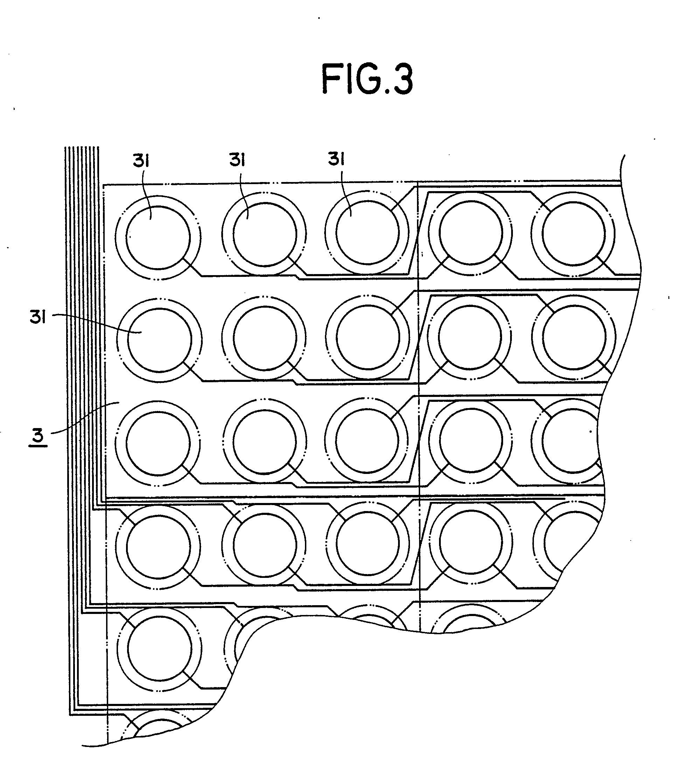

Fig.3 is an enlarged partial view showing key switches.

## Detailed Description of the Preferred Embodiment

A preferred embodiment of the present invention will be described with reference to the accompanying drawings. In this embodiment, a keyboard using ten-keys and other functional keys is exemplarily employed, but it should be understood that the present invention is not limited thereto and other keyboards such as a JIS keyboard and the like may be applied. The term keyboard herein used means any input device by which an operator can input information.

In the Figures, a keyboard 1 has twenty four keys 2 including ten-keys and other functional keys such as a memory key. Each key 2 has a same size and shape and disposed removably and slidably on a frame of the keyboard. Twenty five key switches 3 are fixedly mounted on the keyboard 1. Each key switch 3 has nine movable and fixed contact pairs 31, and faces the bottom face of the key 2. The contact pairs are preferably formed under a flexible film such as vinyl chroride, polyethylene terephthalate, urethane or the like. Each contact pair 31 activated upon depression of the key 2 as described later is connected to ground at one terminal thereof. On the top face of each key, a numeral 0 to 9, a symbol "x", "/", "-" or "+", a character "MR" and the like are depicted.

The bottom of each key is arranged to be capable of forming up to nine protrusions (a to i) 21. The height h1 of protrusions (a, c, g, i) 21 formed at the four corners is set smaller than that h2 of other protrusions (b, d, e, f, h). In this embodiment, at least one among the five protrusions (b, d, e, f, h) is formed together with the remaining four lower protrusions (a, c, g, i). The combination of protrusions is used to identify a particular key. For example, a key for "0" has the four corner protrusions (a, c, g, i) and one protrusion (b), a key for "1" with the four corner protrusions (a, c, g, i) and one protrusion (d), a key for "5" with the four protrusions (a, c, g, i) and two protrusions (d, e). Further, a key for "MR" has the four corner protrusions (a, c, g, i) and three protrusions (d, e, f).

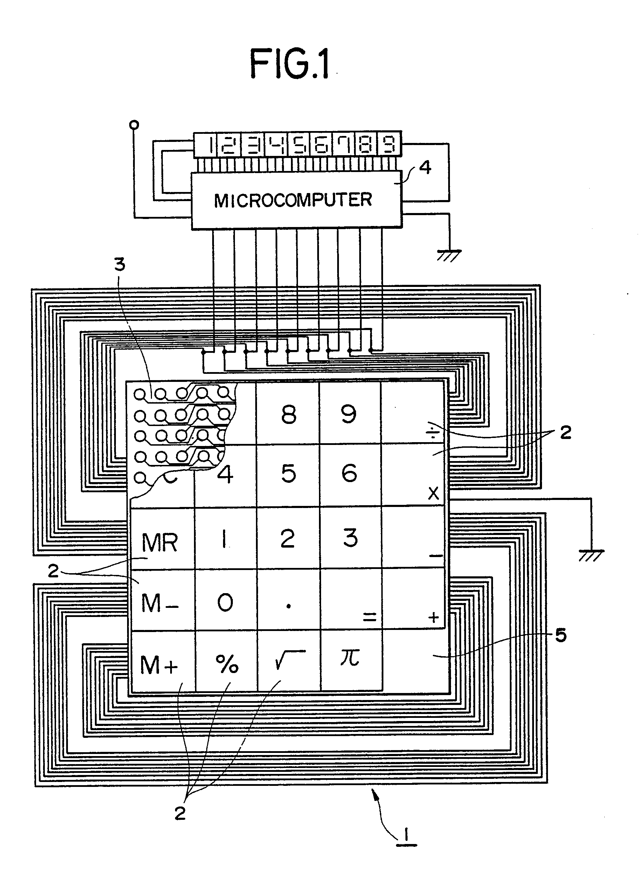

Each of the nine contact pairs 31 of a key switch 3 made of a conductive film is connected at the other terminal to corresponding other contact pairs at their other terminals of the remaining 24 key switches 3. Particularly, a contact pair 31 corresponding in position to the protrusion $a$ of a key 2 is electrically connected via leads as shown in Fig.1 to the remaining contact pairs for the protrusion $a$.

In operation, if an operator depresses the center portion of a key 2 for "1", the protrusion $d$ having a height h2 first depresses a corresponding contact pair 31. As the operator continues to further depress the key, the four corner protrusions (a, c, g, i) having a height h1 depress the corresponding contact pairs 31, which is detected by a microcomputer 4 connected to the keyboard 1 to thereby allow the input of specific data (i.e., the depression of key "1") into the microcomputer 4 including a proper interface circuit. Similarly, if an operator depresses the center portion of a key for "MR" for example, first the contact pairs 31 corresponding in position to the protrusions $d$, $e$ and $f$ are activated and then the four corner contact pairs 31 are activated to thereby identify the depression of the key for "MR".

Since the size and shape of each key are constructed substantially the same and each key can be identified based on the combination of depressed contact pairs specific to that key, each key can be assigned any desired location in the array of keys in the keyboard. Thus, it is possible for an operator, particularly for a left-handed operator, to rearrange frequently used keys at his most suitable positions such as home positions, as desired. In addition, the keyboard with two types of higher and lower protrusions ensures a reliable operation, because a depression of a key is confirmed two times, once at the activation of higher protrusions and then at the actuation of lower protrusions.

In the above embodiment, two types of protrusions, higher and lower protrusions have been used for generating a key code and a key input acknowledge code. However, all the protrusions may be used instead for generating a key code only. In this case, if the number of protrusions is $n$, then this arrangement can identify $n$ powers of 2 keys. Also, in the above embodiment, although four lower protrusions have been assigned for generating a key input acknowledge code, this number is optional and may be any desired number.

Further, contact pairs may be formed at lower and higher positions in the keyboard for acting upon the lower and higher protrusions.

Apart from the above, the keyboard of this embodiment has one space for a key as indicated by 5 in Fig.5. Therefore, this keyboard can be used as a toy for rearranging the numbers, figures and characters, by two-dimensionally moving each key using the one space 5.

Further, since the switch of this embodiment is arranged to provide a closed circuit between an input interface and ground, the number of input ports can be reduced. For example, in case of a keyboard having 50 keys, 15 input ports are required in an ordinary matrix connection. However, in this embodiment, only 6 input ports become necessary. If the matrix connection is applied to the embodiment, the number of input ports becomes five. Furthermore, since one terminals of the contact pairs are all grounded, good productivity, low cost, and low failure are ensured.

As described so far, according to the present invention, a keyboard having a plurality of keys and key switches operated by the keys, comprises a plurality of protrusions formed on the bottom of each key for identifying each key whose top is marked with information such as character, figure, symbol or the like; and a plurality of contact pairs formed on the keyboard in correspondence with the plurality of protrusions. Thus, it is possible to identify a depressed key based on a combination of actuated contact pairs so that any desired arrangement of keys on a keyboard is possible. Particularly, frequently used keys by an operator can be assigned most suitable positions such as home positions. Further, provision of one space through which keys are moved to different positions enables a game such as a numeric rearrangement using the keyboard.

## Claims

1. A keyboard comprising:

a plurality of keys each having a same size and shape and disposed removably and slidably on a frame of the keyboard, the top of each key provided with a marking;

a plurality of key switches fixedly mounted on said keyboard frame and each having a predetermined number of movable and fixed contact pairs at predetermined positions; and

a plurality of protrusions same in number as said predetermined number and formed at the bottom surface of said each key at positions corresponding to said predetermined positions of said contact pairs, said plurality of protrusions being arranged in each key in a different predetermined pattern;

whereby when any one of said keys is actuated, said different predetermined pattern of said plurality of protrusions identifies said one of keys, based on a combination of said plurality of protrusions acting upon said predetermined number of contact pairs.

2. A keyboard according to claim 1, wherein the number of said plurality of keys is less in number by one than that of said key switches to provide a vacant space in said frame to allow said key to freely move two-dimensionally through said vacant space.

3. A keyboard comprising:

a plurality of keys each having a same size and shape and disposed removably and slidably on a frame of the keyboard, the top of each key provided with a marking;

a plurality of key switches fixedly mounted on said keyboard frame and each having a predetermined number of movable and fixed contact pairs at predetermined positions; and

a plurality of protrusions same in number as said predetermined number and formed at the bottom surface of said each key at positions corresponding to said predetermined positions of said contact pairs;

said protrusions including at least one protrusion of a first predetermined height and the other protrusions of a second predetermined height greater than said first predetermined height, said other protrusions being arranged in each key in a different predetermined pattern;

whereby when any one of said keys is actuated, said different predetermined pattern of said other protrusions identifies said one of keys.

4. A keyboard according to claim 3, wherein the number of said plurality of keys is less in number by one than that of said key switches to provide a vacant space in said frame to allow said key to freely move two-dimensionally through said vacant space.

# FIG.1

FIG.2A

FIG.2B

A-A,C-C

FIG.2C

B-B

# FIG.3